Europäisches Patentamt

European Patent Office

Office européen des brevets

(11) Veröffentlichungsnummer: **0 317 868 B1**

# (12) EUROPÄISCHE PATENTSCHRIFT

(45) Veröffentlichungstag der Patentschrift: **27.05.92**

(21) Anmeldenummer: **88118980.7**

(22) Anmeldetag: **14.11.88**

(51) Int. Cl.⁵: **H02K 19/26**

(54) **Hilfswicklung an einem Generator unter Einbeziehung der Spannbolzen des Ständerblechpaketes.**

(30) Priorität: **26.11.87 DE 3740178**

(43) Veröffentlichungstag der Anmeldung:
**31.05.89 Patentblatt 89/22**

(45) Bekanntmachung des Hinweises auf die
Patenterteilung:
**27.05.92 Patentblatt 92/22**

(84) Benannte Vertragsstaaten:
**CH DE FR GB LI NL SE**

(56) Entgegenhaltungen:
**DE-A- 1 538 411**

(73) Patentinhaber: **SIEMENS AKTIENGESELL-
SCHAFT
Wittelsbacherplatz 2
W-8000 München 2(DE)**

(72) Erfinder: **Duffert, Heinrich
Pestalozzistrasse 21
W-4330 Mülheim/Ruhr(DE)**

## Beschreibung

Die vorliegende Erfindung betrifft eine Hilfswicklung im Ständer eines Generators gemäß dem Oberbegriff des Anspruchs 1. Zur Erregung eines Generators wird üblicherweise eine Erregermaschine benötigt, welche ihrerseits wiederum mit einer Hilfserregerleistung versorgt werden muß. Diese Hilfserregerleistung von einigen KVA, beispielsweise ca. 14 KVA, kann beispielsweise von einer Hilfserregermaschine erzeugt werden, welche mit dem Generator verbunden ist. Zum Stand der Technik gehören jedoch auch Anordnungen, bei denen die Hilfserregerleistung durch eine Hilfswicklung im Hauptgenerator bereitgestellt wird. So sind Hilfswicklungen in den Ständernuten für Haupt- und Hilfserregerleistungen bekannt. Die dafür notwendigen Modifikationen der Ständernuten und ggf. der Ständerwicklung sind jedoch relativ aufwendig, so daß sich eine solche Anordnung insbesondere nur zur Erzeugung der Hilfserregerleistung wirtschaftlich meist nicht vertreten läßt.

Aufgabe der vorliegenden Erfindung ist eine Hilfswicklung im Ständer eines Generators, die sich ohne erheblichen konstruktiven Aufwand und ohne Modifikationen der Ständernuten bzw. Ständerwicklung verwirklichen läßt. Dabei soll diese Hilfswicklung für genügend elektrische Leistung ausgelegt sein, um beispielsweise die Erregermaschine damit zu speisen oder auch um andere Systeme mit elektrischer Leistung zu versorgen. Die Größenordnung dieser elektrischen Leistung soll beispielsweise bei ca. 14 KVA mit Spannungen bis ca. 400 V und mit Strömen bis ca. 20 A liegen.

Zur Lösung dieser Aufgabe wird eine Hilfswicklung mit dem kennzeichnenden Merkmal des Anspruchs 1 vorgeschlagen. Der Erfindung liegt der Gedanke zugrunde, daß die bei einem üblichen Blechpaket ohnehin vorhandenen Spannbolzen einerseits elektrisch vom Blechpaket isoliert sind und andererseits eine genügende Leitfähigkeit für die Erzeugung der gewünschten elektrischen Leistung haben. Dies bedeutet, daß jeder Spannbolzen im Prinzip die Funktion eines Wicklungsstabes, d. h. eines axialen Leiters im Generatorständer übernehmen kann. Er muß lediglich in eine geeignete Leiterschleife einbezogen werden. Eine Modifikation von Ständernuten oder Ständerwicklung entfällt vollkommen.

Da im allgemeinen die Erregermaschine mit einem Dreiphasen-Wechselstrom versorgt werden muß, ist es besonders vorteilhaft, wie im Anspruch 2 beschrieben, mindestens 3 Spannbolzen zu einer Dreiphasenwicklung zusammenzuschalten. Durch Zusammenschaltung von weiteren Spannbolzen können auch andere Mehrphasenwicklungen verwirklicht werden.

Besonders einfach und für den Zweck der Bereitstellung von Hilfsenergie geeignet ist die im Anspruch 3 beschriebene Lösung, bei der drei Spannbolzen an einer Generatorseite zu einem Sternpunkt zusammengeschaltet werden, so daß sie insgesamt eine Dreiphasenwicklung bilden. Aufgrund der Tatsache, daß an der Erregerseite schon relativ viele Einbauten im Wickelkopfraum vorhanden sind, ist es vorzuziehen, daß die zur Herstellung des Sternpunktes notwendigen Verbindungen auf dieser Seite erfolgen, während an der Turbinenseite die Anschlußleitungen für die Dreiphasenwicklung verlegt werden. Eine umgekehrte Anordnung mit Verbindungsleitungen an der Turbinenseite und Anschlußleitungen an der Erregerseite ist aber prinzipiell möglich.

Die Erregermaschine muß nicht unbedingt mit einem qualitativ hochwertigen Dreiphasen-Wechselstrom versorgt werden. Es kommt nicht darauf an, ob die drei Phasen genau 120° gegeneinander verschoben sind und ob die Amplituden aller drei Phasen gleich groß sind. Auch braucht es sich bei den erzeugten Wechselströmen nicht um reine Sinus-Schwingungen zu handeln. Aus diesem Grunde ist es praktisch immer möglich, aus den ohnehin vorhandenen Spannbolzen solche auszuwählen, die eine geeignete Dreiphasenwicklung ergeben, selbst dann, wenn die Anzahl der Spannbolzen nicht durch 3 teilbar ist. Bezüglich der Phasenlage ist eine Toleranz von etwa plus/minus 30° unschädlich.

Wie im Anspruch 4 angegeben, können vorzugsweise im turbinenseitigen, aber auch im erregerseitigen Wickelkopfraum die beteiligten Spannbolzen mit Anschlußleitungen versehen werden, so daß der Dreiphasen-Wechselstrom einem entsprechenden Verbraucher zugeleitet werden kann.

Eine weitere Schaltungsvariante ist stellvertretend für viele andere Möglichkeiten im Anspruch 5 angegeben und wird anhand der Zeichnung näher erläutert. Durch Zusammenschalten von mehr als drei Spannbolzen können unterschiedliche Anforderungen bezüglich Spannung und Stromstärke der erzeugten elektrischen Leistung und bezüglich der Qualität des erzeugten Mehrphasen-Wechselstromes leichter erfüllt werden.

Wie im Anspruch 6 angegeben, eignet sich eine solche Hilfswicklung besonders für einen luftgekühlten Generator, da dessen konstruktive Voraussetzungen die Einbeziehung von Spannbolzen in eine Hilfswicklung besonders leicht ermöglichen.

Schon mit herkömmlichen Mitteln isolierte Spannbolzen können problemlos für Hilfswicklungen verwendet werden. Insbesondere ist dies jedoch gemäß Anspruch 7 dann möglich, wenn die Spannbolzen zu einem Ständer gehören, der durch eine sogenannte Ganztränkung elektrisch isoliert wird. Bei der Ganztränkung, bei der Ständerblechpaket mit Wicklung und Spannbolzen in einer Tränkharzmischung zur elektrischen Isolierung getränkt wird, entstehen besonders spannungsfeste elektrische Isolierungen, die auch hohe Spannungsbelastungen der Spannbolzen zulassen.

Die Verwendung der Spannbolzen als elektrische Leiter einer Hilfswicklung kann es aus Sicherheitsgründen erforderlich machen, die Hilfswicklung mit Sicherungen auszustatten, welche hohe Kurzschlußströme über die Spannbolzen im Falle einer elektrischen Störung verhindern. Diese Ausgestaltung gemäß Anspruch 8 vermeidet Schäden an den Spannbolzen durch zu hohe Kurzschlußströme.

Gemäß Anspruch 9 ist dabei besonders sinnvoll, die Sicherungen räumlich und elektrisch möglichst nahe an den beteiligten Spannbolzen anzuordnen, um jedweden Kurzschluß der Spannbolzen mit dem Blechpaket auszuschließen.

Ausführungsbeispiele der Erfindung sind in der Zeichnung dargestellt, und zwar zeigen

Fig. 1 einen Längsaxialschnitt durch einen Generator gemäß dem Stand der Technik unter Andeutung der Anschlußleitungen der Hilfswicklung im turbinenseitigen Wickelkopfraum,

Fig. 2 und 4 einen Querschnitt durch den Generator im Bereich des Wickelkopfes an der Erregerseite und

Fig. 3 und 5 einen Querschnitt durch den Generator im Bereich des Wickelkopfes an der Turbinenseite, wobei in den Fig. 2, 3, 4 und 5 schematisch die erfindungsgemäße Zusammenschaltung von Spannbolzen zu Mehrphasenwicklungen in verschiedenen Alternativen dargestellt ist.

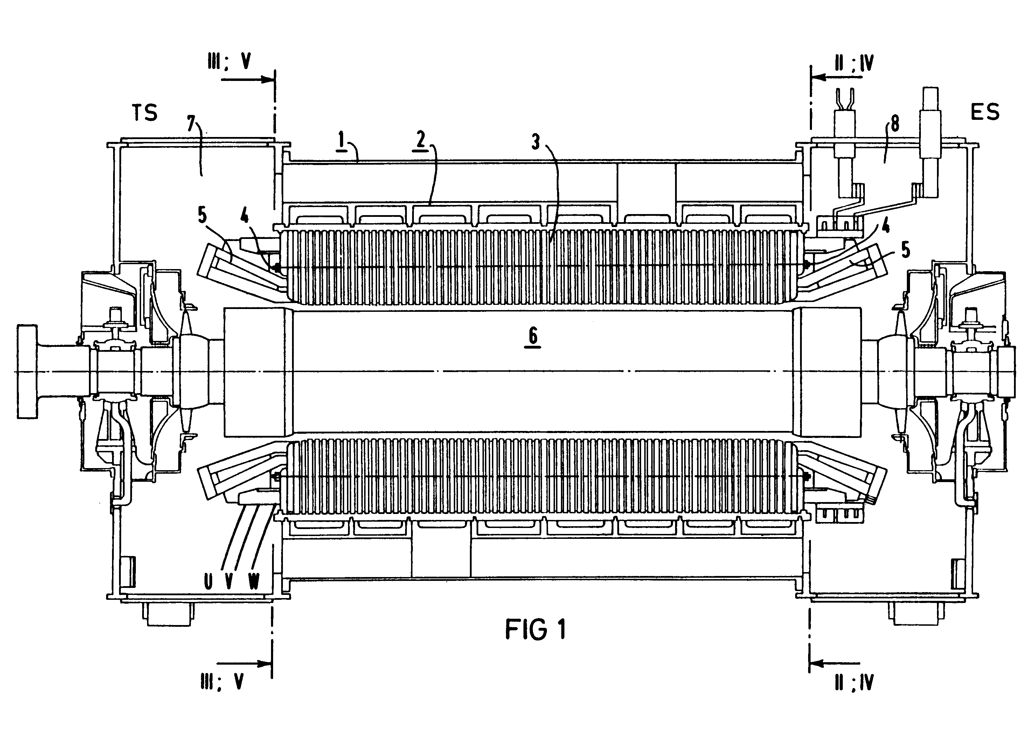

Fig. 1 zeigt im Längsaxialschnitt und in vereinfachender Darstellung einen luftgekühlten Generator, wie er nach dem Stand der Technik bekannt ist. Die für das Verständnis der vorliegenden Erfindung unwesentlichen Einzelheiten wurden nicht mit Bezugszeichen versehen und werden im folgenden auch nicht näher beschrieben, da sie als bekannt vorausgesetzt werden können. Der gesamte Generator 1 besteht aus einem Generatorständer 2 und dem Generatorläufer 6. Der Ständer 2 des Generators weist ein aus Magnetblechen geschichtetes Blechpaket 3 auf, welches durch Spannbolzen 4 zusammengehalten wird. Diese Spannbolzen sind gegenüber dem Blechpaket elektrisch isoliert. In Nuten des Ständers ist die Ständerwicklung 5, im folgenden zur Unterscheidung als Hauptwicklung 5 bezeichnet, angeordnet. Die Spannbolzen 4 sind an ihren Enden vom turbinenseitigen Wickelkopfraum 7 bzw. vom erregerseitigen Wickelkopfraum 8 relativ leicht zugänglich, so daß an ihnen ohne konstruktive Änderungen des Generators elektrische Leitungen befestigt werden können. Im folgenden ist die der Turbine zugewandte Stirnseite des Generators mit TS bezeichnet, die der Erregermaschine zugewandte Seite mit ES.

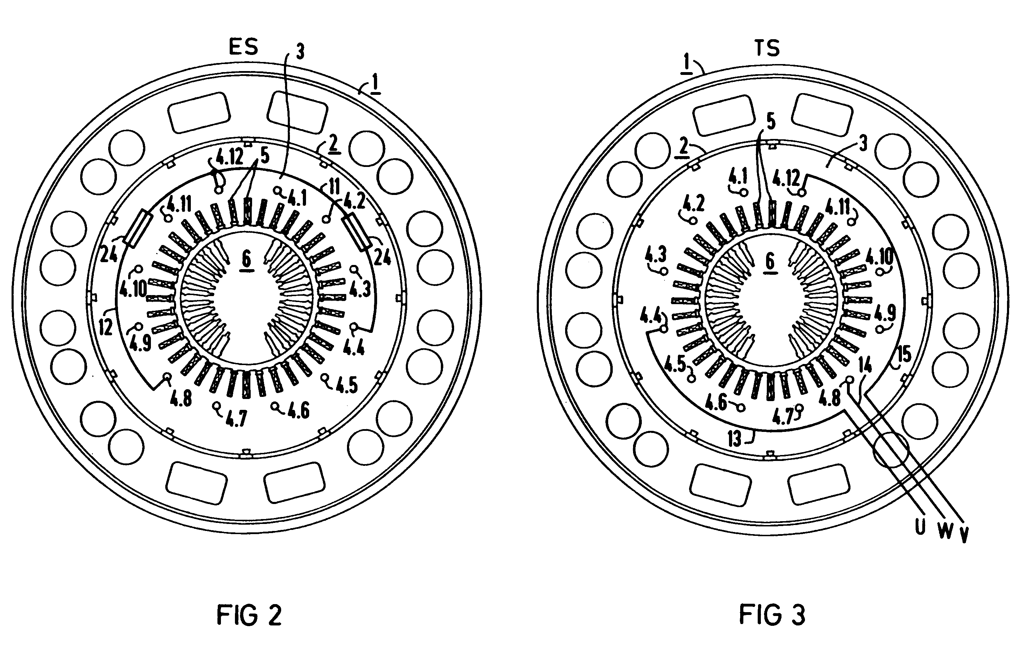

Fig. 2 zeigt einen Querschnitt durch Fig. 1 entlang der Linie II-II und Fig. 3 einen entsprechenden Querschnitt entlang der Linie III-III. In diese Querschnitte sind schematisch die elektrischen Verbindungsleitungen und Anschlußleitungen eingezeichnet, die erfindungsgemäß die Spannbolzen 4 zu einer Mehrphasenwicklung zusammenschalten. Eine der einfachsten Varianten ist als Ausführungsbeispiel in den Fig. 2 und 3 dargestellt. Die in diesem Falle zwölf Spannbolzen sind mit 4.1 bis 4.12 bezeichnet. Drei dieser Spannbolzen 4.4, 4.8, 4.12 bilden die axialen Leiterstäbe einer Dreiphasenwicklung. Sie sind auf der Erregerseite ES durch Verbindungsleitungen 11, 12 zu einem Sternpunkt zusammengeschaltet, welcher am erregerseitigen Ende des Spannbolzens 4.12 liegt. An der Turbinenseite TS sind, wie in Fig. 3 dargestellt, die Spannbolzen 4.4., 4.8, 4.12 mit Anschlußleitungen 13, 14, 15 versehen, welche aus dem Wickelkopfbereich herausgeführt werden und beispielsweise über einen Anpaßtransformator und einen Regler die Erregermaschine mit der notwendigen Erregerleistung versorgen. Die drei Phasen des dort anliegenden Wechselstromes sind mit U, V, W bezeichnet. In den Verbindungsleitungen 11, 12 bzw. Anschlußleitungen 13, 14, 15 können Sicherungen 24 angeordnet sein, die zu hohe Ströme durch die Spannbolzen verhindern. Als Sicherungen sind hier alle Einrichtungen zu verstehen, welche die Überschreitung einer vorgegebenen Stromstärke durch Unterbrechung des Stromkreises verhindern. Solche Sicherungen sollten sinnvollerweise möglichst nahe an den Spannbolzen 4.4, 4.8, 4.12 angeordnet sein, um Kurzschlüsse mit dem Blechpaket möglichst auszuschließen. Da jedoch die Schädigung eines Spannbolzens nur durch zwei unabhängige Fehler an beiden Generatorseiten entstehen kann und die Leitungen einzeln in Rohren verlegt werden können, sind Sicherungen nicht unbedingt erforderlich.

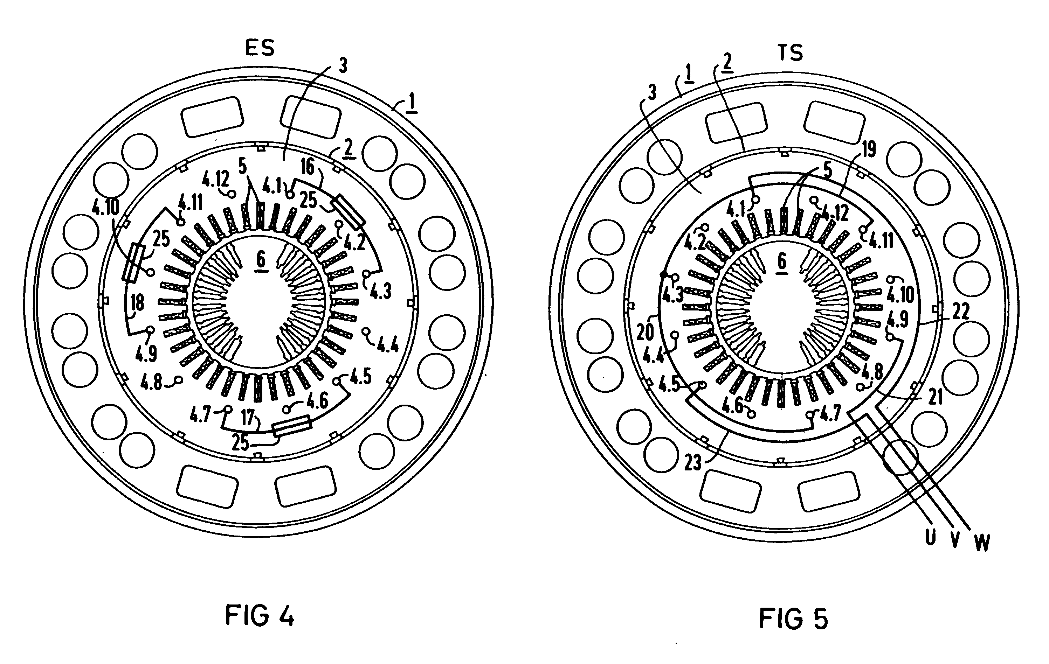

Eine andere Schaltungsvariante ist in den Fig. 4 und 5 dargestellt. Die Fig. 4 und 5 zeigen die gleichen Schnitte durch Fig. 1 wie die Fig. 2 bzw. 3. Es ist jedoch schematisch eine andere Schaltungsvariante bei der Zusammenschaltung von Spannbolzen zu einer Dreiphasenwicklung dargestellt. Auf der Erregerseite sind drei Verbindungsleitungen vorhanden, und zwar eine Verbindungsleitung 16, die die Spannbolzen 4.1 und 4.3 verbindet, eine Verbindungsleitung 17 zwischen den Spannbolzen 4.5 und 4.7 und eine Verbindungsleitung 18 zwischen den Spannbolzen 4.9 und 4.11. Diese Verbindungsleitungen 16, 17, 18 können wiederum mit Sicherungen 25 versehen sein. Turbinenseitig sind die Spannbolzen 4.3, 4.7 und 4.11 durch Verbindungsleitungen 20 bzw. 19 verbunden. Außerdem sind die Spannbolzen 4.9, 4.1 und 4.5 mit Anschlußleitungen 21, 22 bzw. 23 versehen, mit welchen die drei Phasen U, V, W herausgeführt werden.

Die in der Zeichnung beispielhaft beschriebenen Varianten zur Bildung von Mehrphasenwicklungen unter Einbeziehung von Spannbolzen stellen nur eine kleine Auswahl der schaltungstechnischen Möglichkeiten dar. Grundsätzlich können solche Wicklungen auch unter Einbeziehung von außerhalb des Blechpaketes verlaufenden Leitungen gebildet werden, was die Möglichkeiten noch zusätzlich erhöht. Die erfindungsgemäße Einbeziehung von Spannbolzen in Wicklungen zur Erzeugung von Einphasen- oder Mehrphasen-Welchselströmen ermöglicht eine wirtschaftlich sehr günstige Bereitstellung von elektrischer Leistung bis zu beispielsweise 15 KVA, vorzugsweise zur Versorgung der Erregermaschine, ohne daß an den Nuten oder Wicklungen des Ständers Modifikationen vorgenommen werden müßten. Eine Hilfserregermaschine wird dabei überflüssig.

**Patentansprüche**

1.  Hilfswicklung im Ständer (2) eines Generators (1) zur Erzeugung elektrischer Leistung, insbesondere zur Bereitstellung von Hilfserregerleistung für die Versorgung einer Erregermaschine, wobei der Ständer (2) des Generators (1) ein Blechpaket (3) aus geschichteten Magnetblechen aufweist, die durch mindestens einen von dem Blechpaket (3) elektrisch isolierten, axial verlaufenden Spannbolzen (4) zusammengehalten werden,
    **dadurch gekennzeichnet**, daß die Hilfswicklung unter Einbeziehung von mindestens einem Spannbolzen (4) gebildet ist.

2.  Hilfswicklung nach Anspruch 1, **dadurch gekennzeichnet**, daß die Hilfswicklung durch Zusammenschaltung (11, 12; 16, 17, 18, 19, 20) von mindestens drei Spannbolzen (4.4, 4.8, 4.12; 4.1, 4.3, 4.5, 4.7, 4.9, 4.11) zu einer Drei- oder Mehrphasenwicklung gebildet ist.

3.  Hilfswicklung nach Anspruch 1 oder 2, **dadurch gekennzeichnet**, daß auf der Erregerseite (ES) bzw. der Turbinenseite (TS) des Generators (1) im Wickelkopfraum (8 bzw. 7) Verbindungsleitungen (11, 12) zwischen drei Spannbolzen (4.4, 4.8, 4.12) vorhanden sind, durch die ein Sternpunkt (4.12) einer Dreiphasenwicklung gebildet wird, wobei die beteiligten Spannbolzen etwa gleichmäßig über den Umfang des Blechpaketes (3) verteilt sind, so daß die drei Phasen (U, V, W) der Dreiphasenwicklung untereinander etwa um 120° verschoben sind mit einer Toleranz von maximal etwa plus/minus 30°.

4.  Hilfswicklung nach Anspruch 1, 2 oder 3, **dadurch gekennzeichnet**, daß im turbinenseitigen bzw. erregerseitigen Wickelkopfraum (7 bzw. 8) Anschlußleitungen (13, 14, 15; 21, 22, 23) an mindestens drei Spannbolzen (4.4, 4.8, 4.12; 4.9, 4.1, 4.5) vorhanden sind für die drei Phasen (U, V, W) der Hilfswicklung.

5.  Hilfswicklung nach Anspruch 1, 2 oder 4, **dadurch gekennzeichnet**, daß sechs oder mehr Spannbolzen (4.1, 4.3, 4.5, 4.7, 4.9, 4.11) so zusammengeschaltet sind, daß sich an der Erregerseite (ES) oder der Turbiunenseite (TS) ein Sternpunkt einer Mehrphasenwicklung ergibt und an der anderen Seite (TS bzw. ES) ein Mehrphasenwechselstrom über Anschlußleitungen (21, 22, 23) entnehmbar ist.

6.  Hilfswicklung nach einem der vorhergehenden Ansprüche, **dadurch gekennzeichnet**, daß die Hilfswicklung in einem luftgekühlten Generator angeordnet ist.

7.  Hilfswicklung nach einem der vorhergehenden Ansprüche, **dadurch gekennzeichnet**, daß der die Hilfswicklung tragende Ständer (3) mit seinen Spannbolzen (4) durch eine Ganztränkung elektrisch isoliert ist.

8.  Hilfswicklung nach einem der vorhergehenden Ansprüche, **dadurch gekennzeichnet**, daß die Hilfswicklung Sicherungen (24; 25) aufweist, welche hohe Kurzschlußströme über die in die Hilfswicklung einbezogenen Spannbolzen (4.4, 4.8, 4.12; 4.1, 4.3, 4.5, 4.7, 4.9, 4.11) im Falle einer elektrischen Störung verhindern.

9.  Hilfswicklung nach Anspruch 7, **dadurch gekennzeichnet**, daß die Sicherungen (24; 25) räumlich und elektrisch möglichst nahe an den beteiligten Spannbolzen (4.4, 4.8, 4.12; 4.1, 4.3, 4.5, 4.7, 4.9, 4.11) angeordnet sind.

**Claims**

1.  Auxiliary winding in the stator (2) of an electric power generator (1), in particular for making available auxiliary exciter output for supplying an exciter, wherein the stator (2) of the generator (1) has a laminated core (3) of layered magnetic steel sheets, which are held together by means of at least one clamping bolt (4), extending axially and electrically insulated from the laminated core (3), characterised in that the auxiliary winding is formed with incorporation of at least one clamping bolt (4).

2.  Auxiliary winding according to claim 1, characterised in that the auxiliary winding is formed by interconnection (11, 12; 16, 17, 18, 19, 20) of at least three clamping bolts (4.4, 4.8, 4.12; 4.1, 4.3, 4.5, 4.7, 4.9, 4.11) to give a three or multi-phase winding.

3. Auxiliary winding according to claim 1 or 2, characterised in that on the exciter side (ES) or the turbine side (TS) of the generator (1) in the end winding cavity (8 or 7) interconnecting leads (11, 12) are present between three clamping bolts (4.4, 4.8, 4.12) by means of which a neutral point (4.12) of a three-phase winding is formed, wherein the clamping bolts concerned are distributed substantially evenly over the periphery of the laminated core (3), so that the three phases (U, V, W) of the three-phase winding are mutually displaced by approximately 120° with a tolerance of a maximum of approximately plus/minus 30°.

4. Auxiliary winding according to claim 1, 2 or 3, characterised in that in the end winding cavity (7 or 8) on the turbine side or exciter side respectively, connecting leads (13, 14, 15; 21, 22, 23) are present at at least three clamping bolts (4.4, 4.8, 4.12; 4.9, 4.1, 4.5) for the three phases (U, V, W) of the auxiliary winding.

5. Auxiliary winding according to claim 1, 2 or 4, characterised in that six or more clamping bolts (4.1, 4.3, 4.5, 4.7, 4.9, 4.11) are interconnected in such a way that a neutral point of a multi-phase winding results on the exciter side (ES) or the turbine side (TS), and on the other side (TS or ES respectively) a multi-phase alternating current is able to be drawn by way of connecting leads (21, 22, 23).

6. Auxiliary winding according to one of the preceding claims, characterised in that the auxiliary winding is arranged in an air-cooled generator.

7. Auxiliary winding according to one of the preceding claims, characterised in that the stator (3) bearing the auxiliary winding is electrically insulated with its clamping bolt (4) through impregnation by total immersion.

8. Auxiliary winding according to one of the preceding claims, characterised in that the auxiliary winding has fuses (24; 25) which prevent high short-circuit currents by way of the clamping bolts (4.4, 4.8, 4.12; 4.1, 4.3, 4.5, 4.7, 4.9, 4.11), incorporated in the auxiliary winding, in the case of an electrical fault.

9. Auxiliary winding according to claim 7, characterised in that the fuses (24; 25) are arranged spatially and electrically as close as possible to the clamping bolts concerned (4.4, 4.8, 4.12; 4.1, 4.3, 4.5, 4.7, 4.9 4.11).

**Revendications**

1. Enroulement auxiliaire situé dans le stator (2) d'un générateur (1) servant à produire une énergie électrique, notamment pour la délivrance d'une énergie d'excitation auxiliaire pour l'alimentation d'une machine excitatrice, le stator (2) du générateur (1) comportant un paquet de tôles (3) formé de tôles magnétiques empilées, qui sont maintenues assemblées par au moins un boulon axial de serrage (4) isolé électriquement par rapport au paquet de tôles (3), caractérisé par le fait que l'enroulement auxiliaire est formé moyennant l'insertion d'au moins un boulon de serrage (4).

2. Enroulement auxiliaire suivant la revendication 1, caractérisé par le fait que l'enroulement auxiliaire est formé par l'interconnexion (11,12; 16,17,18,19,20) d'au moins trois boulons de serrage (4.4, 4.8, 4.12; 4.1, 4.3, 4.5, 4.7, 4.9, 4.11) pour former un enroulement triphasé ou polyphasé.

3. Enroulement auxiliaire suivant la revendication 1 ou 2, caractérisé par le fait que sur le côté excitatrice (ES) ou sur le côté turbine (TS) du générateur (1), il est prévu, dans l'espace (8 ou 7) de la tête de bobinage, des conducteurs de liaison (11,12) qui s'étendent entre trois boulons de serrage (4.4,4.8,4.12) et qui forment un neutre (4.12) d'un enroulement triphasé, les boulons de serrage concernés étant répartis d'une manière approximativement uniforme sur le pourtour du paquet de tôles (3), de sorte que les trois phases (U, V, W) de l'enroulement triphasé sont décalées les unes des autres d'environ 120°, avec une tolérance égale au maximum à environ à plus/moins 30°.

4. Enroulement auxiliaire suivant la revendication 1, 2 ou 3, caractérisé par le fait que dans l'espace (7 ou 8) de la tête de bobinage, située sur le côté turbine ou sur le côté excitatrice, il est prévu des conducteurs de raccordement (13,14,15; 21,22,23) disposés sur au moins trois boulons de serrage (4.4, 4.8, 4.12; 4.9, 4.1, 4.5), pour les trois phases (U, V, W) de l'enroulement auxiliaire.

5. Enroulement auxiliaire suivant la revendication 1, 2 ou 4, caractérisé par le fait que six ou un plus grand nombre de boulons de serrage (4.1, 4.3, 4.5, 4.7, 4.9, 4.11) sont interconnectés de sorte que, sur le côté excitatrice (ES) ou sur le côté turbine (TS), on obtient un neutre d'un enroulement polyphasé et que, de l'autre côté (TS ou ES), on peut prélever un courant alternatif polyphasé par l'intermédiaire de conducteurs de raccordement (21,22,23).

6. Enroulement auxiliaire suivant l'une des revendications précédentes, caractérisé par le fait que l'enroulement auxiliaire est disposé dans un générateur refroidi par air.

7. Enroulement auxiliaire suivant l'une des revendications précédentes, caractérisé par le fait que le stator (3) portant l'enroulement auxiliaire équipé de ses boulons de serrage (4) est isolé électriquement au moyen d'une imprégnation complète.

8. Enroulement auxiliaire suivant l'une des revendications précédentes, caractérisé par le fait que l'enroulement auxiliaire comporte des fusibles (24;25), qui empêchent, dans le cas d'une perturbation électrique, la circulation de courants intenses de court-circuit dans les boulons de serrage (4.4, 4.8, 4.12; 4.1, 4.3, 4.5, 4.7, 4.9, 4.11) insérés dans l'enroulement auxiliaire.

9. Enroulement auxiliaire suivant la revendication 7, caractérisé par le fait que les fusibles (24; 25) sont disposés aussi près que possible, spatialement et électriquement, des boulons de serrage utilisés (4.4, 4.8, 4.12; 4.1, 4.3, 4.5, 4.7, 4.9, 4.11).

FIG 1

FIG 3

FIG 2

8

FIG 5

FIG 4